# EUROPEAN PATENT APPLICATION

(11) **EP 2 597 329 A1**
(43) Date of publication of application: **29.05.2013**
(21) Application number: 11190309.2
(22) Date of filing: 23.11.2011
(51) Int. Cl.: F16D 65/18, F03D 7/02

(54) **Braking system for a wind turbine**

(71) Applicant: Siemens Aktiengesellschaft, 80333 München (DE)
(72) Inventor: Wohlleb, Matthias, 52146 Würselen (DE)

(57) **Abstract**

It is described a braking system (100, 200, 350) for braking a rotating brake disk (123, 223), the braking system comprising: a brake caliper (101, 201); a body (103, 203) of shape memory material housed in the brake caliper ; and an activation system (105, 205) for affecting the shape memory material, wherein the activation system is adapted to effect a change of a structure of the body (103, 203) of shape memory material such as to reduce a rotational speed of the brake disk (123, 223).

## Description

### Field of invention

The present invention relates to a braking system comprising shape memory material for braking a rotating brake disk, in particular for braking a shaft of a wind turbine. Further, the present invention relates to a wind turbine comprising the braking system. The braking system may be used for any other purpose of braking applications, such as for braking a wheel of a vehicle, such as a car.

### Related prior art or art background

A conventional brake system in wind turbines consists of brake caliper, brake disc and brake pads. The transmission and control of brake forces is done by a hydraulic or pneumatic fluid within a closed circle that is set under pressure by a hydraulic pump or a compressor. For both systems, the hydraulic and pneumatic, there are magnetic valves used for engaging.

The demands of brake systems are transmitting brake forces reliably and due to the need of constant braking forces over a large temperature range. To guarantee the reliability of the transmission medium there is additional equipment for cooling and filtration needed.

The usage of this equipment is directly connected to high expenses of material, space, weight and costs. In addition, during lifetime there are problems with vibration, resonances and damping. An adequate precise controlling of a conventional brake system is impeded by the high amount of inertia of the transmission medium and the insufficient control quality of magnetic valves.

A requirement for the brake system design is that it should be able to hold the drive train in a safe condition for the defined wind conditions. In rare situations, e.g. in a storm, the wind turbine could be loaded by wind speeds which are above the maximal tolerable wind conditions. In this case, the brake system may collapse due to the fact that a too high amount of heat energy is generated while the brake is closed, but the drive train (main shaft of wind turbine) is still rotating because of the too high wind speeds

Problems of hydraulic or pneumatic brake systems used in wind turbines are not solved yet.

In automotive applications, in planes and trains, hydraulic or pneumatic components are partially or completely given up.

The electronic parking brake of a car is a system which gives up a cable pull of the hand brake. Instead electronic actuators engage the parking brake by the driver's finger-tipping of the parking button. In today's passenger cars electronic brake actuators are engaged at a standstill with an upward gradient of the road.

Electronically controlled brake interventions are realized based on the following systems: brake booster, the hybrid brake, the electromechanical brake (EMB), the hydraulic brake, the electro-hydraulic brake and the "Brake By Wire"-system.

The brake booster in a car is a device to regulate a target hydraulic brake pressure on demand. It is activated without overcoming the brake pedal forces of the driver. A sensor measures the reaction time of the driver's feet. A calculator determines a desired brake pressure and engages a high pressure valve to increase the braking force on demand.

The hybrid brake is a combination of hydraulic and electro-hydraulic system. The hybrid brake omits the hydraulic components on the rear axle of the passenger car. Therefore an electronic parking brake is realized without higher effort on the one hand; on the other hand a hydraulic brake system remains at the front axle as a redundant system.

A brake-by-wire system is a brake system which does not rely on hydraulic medium for braking, but uses electronic components instead. Advantages of this kind of brake system are a more compact package, realized comfort functions in combination with driver assistance systems, shorter braking and stopping distances due to a better and easier control. In automotive applications this system is not realized due to missing redundancies and no direct driver interferences, which are absolutely necessary for automotive applications.

Using a hydraulic or pneumatic fluid for operating a brake pad within a braking system involves the problems mentioned above.

There may be a need for a braking system which can reliably ensure a safe braking function and at the same time simplify the system and require less space and/or weight.

This need may be met by the subject matter according to the independent claims. Advantageous embodiments of the present invention are described by the dependent claims.

### Summary of the Invention

According to an embodiment of the present invention it is provided a braking system for braking a rotating brake disk, the braking system comprising a brake caliper; a body of shape memory material housed in the brake caliper; and an activation system for affecting (in particular activating or deactivating) the shape memory material, wherein the activation system is adapted to effect (or trigger) a change of a structure (in particular shape and/or size and/or dimension or extent) of the body of shape memory material such as to reduce a rotational speed of the brake disk.

The brake disk may be fixedly connected to a shaft, in particular to a shaft of a wind turbine or to an axle of a car or vehicle. The shaft may be a main shaft of the wind turbine to which rotor blades are directly connected or the shaft may be a shaft which is only connected via a gear box to the main shaft of the wind turbine. This shaft only indirectly connected to the main shaft may rotate with a much higher frequency (in particular between 50 times and 150 times higher) than that of the main shaft.

The brake disk may also form a part of the braking system such that the braking system according to an embodiment of the present invention comprises the brake disk. The brake disk may for example rotate with a rotational speed of between 1000 rpm to 3000 rpm, in particular around 1500 rpm. The brake disk may for example comprise or be made of steel but may also comprise reinforced carbon-carbon or ceramic composites.

The braking system may in particular employ a friction force to reduce the rotational speed of the brake disk upon applying a force to one or more brake pads such that they come in contact with the brake disk, in particular from two opposite directions. In particular, the brake pads may apply forces to two opposing sites of the brake disk. Thereby, upon reducing the rotational speed of the brake disk using friction forces, heat may be generated.

The brake caliper may house also the one or more brake pads such as to come in contact, via the brake pad surfaces, with the brake disk surface(s) of the brake disk. The brake caliper may be a fixed brake caliper or a floating brake caliper • The brake caliper may be a holding structure for holding or supporting the body of shape memory material such that upon activation or deactivation the body of shape memory material effects at least indirectly (in particular via one or more brake pads) the braking effect.

The activation system may be adapted to activate or deactivate the shape memory material, in particular the shape memory material comprised in the body. The body may in particular consist of shape memory material such as to provide a particular shape or structure or outer form of the shape memory material. The affecting the shape memory material may comprise activating or deactivating the shape memory material. Thereby, activating the shape memory material may refer to triggering a shape change or structure change of the shape memory material. Thereby, the structure change may in particular comprise a shape change (in particular of an outer boundary of the body).

The structure/shape change may occur in different modes, e.g. axial motion and/or bending. For example, upon activation of the shape memory material the body of shape memory material may elongate or shrink in at least one direction. Alternatively or additionally, upon activation of the shape memory material the body of shape memory material may change its shape by for example bending. Further alternatively, upon activation of the shape memory material, torsion of the body of shape memory material may occur or may be triggered.

Depending on the type of the shape memory material the activation system may either comprise a heating source, a magnetic field generating source or an electromagnetic radiation source.

The activation system may be arranged relative to the body of shape memory material to effectively trigger the change of the structure of the body of shape memory material. Thus, the activation system may be appropriately arranged relative to the body of shape memory material. Upon activating or deactivating the shape memory material a portion of the body of shape memory material may be broad closer to the brake disk. In particular, upon activating or deactivating the shape memory material one or more brake pads may be pushed by the portion of the body of shape material towards the brake disk to come in contact with the brake disk such that a friction force is applied to the brake disk in order to reduce the rotational speed of the brake disk.

Using shape memory material in a braking system instead of using hydraulic or pneumatic fluid has several advantages. In particular, hydraulic tubing or hydraulic pipe may be omitted and also hydraulic valves may be omitted for simplifying the braking system. Further, in particular when the braking system makes use of a thermally activatable shape memory material, a cooling system may be simplified or even be omitted. Further, filtering the hydraulic or pneumatic medium is not necessary. All the components of a conventional hydraulic or pneumatic brake system would consume energy which is undesirable. Thus, by omitting these exemplary mentioned components the braking system may have a lower weight and may require less space than a conventional braking system. Thus, energy can be saved with the mechatronical brake system using the shape memory material.

In particular, the shape memory material, or the body of shape memory material may act as an actuator. Further, a braking maneuver with a faster actuation and release performance may be possible, depending on the application and depending on the shape memory material being used.

In the article "Leichte Formgedachtnisaktoren im Automobil-bau", published in Automobiltechnische Zeitschrift- ATZ, on April 2011, shape memory actuators are described. The shape memory actuators are based on materials which are able to change their shape when a certain physical indicator is acting. The reaction on the physical indicator as a reversible change of the materials shape is called "shape memory effect". These materials are special metal alloys, plastics, fiber composite materials or chemicals.

At least three types of shape memory materials may be used in embodiments of the present invention:
● Thermal shape memory actuators
● Ferro-magnetic shape memory actuators
● Optical shape memory actuators

In particular, the shape memory brake actuator described in the present application may have a lower weight, may need less space and may be cheaper than electro-mechanical brakes. Further, the shape memory brake actuators of the present invention have lower noise emission and have lower vibrations.

According to an embodiment of the present invention the activation system is adapted to effect or trigger the change of the structure (or the shape or the extent) of the body of shape memory material such as to displace (in particular to shift or to move) a brake pad surface (forming a surface of a brake pad) in a direction towards a brake disk surface of the brake disk.

In particular, a portion of the body of shape memory material may touch or may even be fixedly connected to a brake pad such as to move the brake pad surface in the direction towards the brake disk surface upon activation or deactivation of the shape memory material. Thereby, the body of shape memory material may act as an actuator to cause a movement of the brake pad surface towards the brake disk surface and to exert a force from the brake disk surface to the brake disk, in order to press the brake pad and the brake disk together. Thereby, an effective braking function may be provided. In particular, upon activation or deactivation of the shape memory material the body may elongate or shrink in at least one direction without bending or without exhibiting torsion.

According to an embodiment of the present invention the change of the structure of the body of shape memory material comprises a change of a(n outer) shape of the body of shape memory material, wherein in particular a curvature of the shape increases upon activating the body of shape memory material such that a protrusion directed towards the brake disk surface evolves.

In particular, the body of shape memory material may be bent upon affecting the shape memory material by the activation system. Thereby, a portion of the body of shape memory material may bulge out or may protrude such as to approach the brake disk surface and such as to apply a force between the brake pad surface and the brake disk surface. Thereby, an effective braking function may be provided.

According to an embodiment of the present invention the change of the structure of the body of shape memory material comprises a change of an extent of the body of shape memory material such that in particular the extent changes in the direction towards a brake disk surface of the brake disk.

The change of the extent of the body of shape memory material may also comprise a change of a shape of the body of shape memory material. In particular, the extent may increase or decrease upon activation or deactivation of the body of shape memory material. For example, the extent may change between 5% and 20% compared to the original extent of the body of shape memory material. Thereby, a simple braking system may be provided, wherein the body of shape memory material effectively may replace a piston moved in a cylinder which is filled with pneumatic or hydraulic fluid in a conventional braking system. Thereby, a configuration of a conventional brake caliper may not need extensive rearrangement or adaptation in order to support or house the body of shape memory material according to this embodiment of the present invention.

Thereby, the braking system may partially make use of conventional components.

According to an embodiment of the present invention the shape memory material is activated by heating the shape memory material, wherein the shape memory material in particular comprises an alloy including Ni and Ti.

In particular, the activation system may comprise a heating element, such as an electric heating element, in particular heating the body of shape memory material by a resistance heater. The shape memory material may for example be purchased from the company Memry Corporation Menlo Park, California.

The thermal shape memory actuator may be based on the reversible martensitic phase transformation. A usable material may be Nickel-Titanium (NiTi), also known as NiTiNol (also referred to Nitinol). An actuator based on this material can be either driven by an external heating source, e.g. an ohmic resistance which is supplied with electric current, or by heating elements. Another way to engage or affect or activate the actuator is to use the heat which is generated by the process or environment of the actuator. Thermal shape memory actuators have an energy density of more that 1kJ/kg.

Nitinol is a metal alloy of nickel and titanium, where the two elements are present in roughly equal atomic percentages. Nitinol is typically composed of approximately 50% to 51% nickel by atomic percent (55% to 56% weight percent). Nitinol alloys exhibit two closely related and unique properties: shape memory and superelasticity (also called pseudoelasticity). Shape memory refers to the ability of nitinol to undergo deformation at one temperature, then recover its original, undeformed shape upon heating above its "transformation temperature". Nitinol's unusual properties are derived from a reversible, solid state phase transformation known as a martensitic transformation. At high temperatures, nitinol assumes an interpenetrating simple cubic crystal structure referred to as austenite (also known as the parent phase). At low temperatures, nitinol spontaneously transforms to a more complicated "monoclinic" crystal structure known as martensite. The temperature at which austenite transforms to martensite is generally referred to as the transformation temperature.

According to an embodiment of the present invention the activation system comprises a heating element (in particular an electric heating element) arranged for heating the shape memory material.

Thereby, the body of shape memory material may be easily affected, in particular activated, by turning the heating element on in order to heat the body of shape memory material.

According to an embodiment of the present invention the shape memory material is activated by subjecting the shape memory material to a magnetic field and wherein the shape memory material in particular comprises an alloy including Ni, Mn and Ga.

The alloy including the metal Ni, Mn, Ga may generate a strain of up to 10%. Thereby, the operating temperatures may range from -40°C to 60°C. In particular, when the body of shape memory material is exposed to a magnetic field the body generates stress, wherein the stress is a function of the magnetic field strength which in turn is a function of an input current which flows through coils of the electromagnet.

Thereby, the magnetic field induced force of the body of shape memory material may depend on its cross-sectional area. Thereby, the excerpted or generated force may be scaled by scaling the cross-sectional area of the body of shape memory material. Thereby, an appropriate braking force or friction force may be generated.

Ferro-magnetic actuators are based on shape memory materials which change the shape by magnetic influence. The magnetic field creates strains in the material within milliseconds. These strains lead to motion or forces. A usable material for this type of actuators is, for example, Ni-Manganese-Gallium (Ni-Mn-Ga). This alloy is developed and sold by the company AdaptaMat Ltd. in Helsinki, Finland. In the article "Basic properties of magnetic shape memory actuators" several actuators are presented and their functionalities are explained. In the article "Application of magnetic shape memory actuators" different applications of ferro-magnetic actuators are presented, like linear motors, valve and pumps. On the internet site of the AdaptaMat company both articles are published, see www.adaptamat.com (Download: 2011-20-07). Further information regarding magnetic shape memory materials can for example be taken from the publication "Basic Properties of Magnetic Shape Memory Actuators" by J. Tellinen et al., 8th International Conference Actuator 2002, Bremen, Germany, 10-12 June 2002.

According to an embodiment of the present invention the activation system comprises an electromagnet arranged for subjecting the shape memory material to a magnetic field for activating the shape memory material.

According to an embodiment of the present invention the shape memory material is activated by radiating the shape memory material with electromagnetic radiation, in particular light, and wherein the shape memory material in particular comprises a polymer.

Optical shape memory actuators may need a light source to be engaged. Their material consists of shape memory polymers which are very sensitive towards light. The condition of the material can change by the influence of light from an elastic condition to a stiff condition by a reversible change of the crystalline structure. The energy density is weaker than for metal alloys.

According to an embodiment of the present invention the braking system further comprises a controller (in particular comprising a semiconductor material and/or program code) controlling the activation system.

The controller may comprise an input terminal for receiving a signal indicating whether a braking function is desired or not. In particular, the controller may be a portion of a wind turbine controller. The controller may for example be adapted to supply a current for operating the heating element or for operating the electro-magnet or for operating the electromagnetic radiation source. Further, the controller may have access or may use calibration curves or calibration data or calibration tables for relating the activation or controlling of the activation system to a change of the structure of the body of the shape memory material. The calibration curves or tables may also relate or additionally relate to a relationship between a current or power supplied to the activation system and a braking function or strength of a braking effect.

Thereby, the braking system may be easily operated in a safe and reliable manner.

According to an embodiment of the present invention the braking system further comprises a sensor detecting a change of the structure of the body of shape memory material, wherein the sensor is communicatively coupled to the controller, wherein the controller controls the activation system based on the change of the structure detected by the sensor. The sensor may for example detect a change of the shape change or of a change of the extent of the body of shape memory material, wherein the sensor may use an optical technique or any other technique. The sensor data may allow a feedback to the controller such as to control the activation system not only based on the desired braking effect but also based on the measured actual change of the structure of the body of shape memory effect. Thereby, the braking system may more reliably and accurately be operated.

According to an embodiment of the present invention the braking system further comprises a brake pad system having a (at least one) brake pad surface adapted to be brought into friction contact with a brake disk surface upon activation or deactivation of the shape memory material.

The brake pad system may comprise one, two or more brake pads. Each of the brake pad may comprise a brake pad surface intended to be brought into contact with the corresponding brake disk surface. The brake pad or the one or more brake pad may or may not be directly connected to the body of shape memory material.

The body of brake memory material may touch the brake pad without being fixedly connected to the brake pad. In this case, there may a retraction system, in particular a retraction spring, provided for withdrawing the brake pad from the disk surface when the body of shape memory effect is not intended to cause a braking function.

In the case, where the brake pad is fixedly connected to the body of shape memory material the retraction instrument or mechanism may be omitted, since upon deactivating the body of shape memory effect the change of the structure of the body of shape memory material may directly cause a withdrawal of the brake pad from the brake disk surface.

According to an embodiment of the present invention the braking system further comprises another body of shape memory material, wherein the brake caliper is adapted as a fixed caliper, wherein the brake pad system comprises another brake pad having another brake pad surface to be brought into contact with another brake disk surface opposing the brake disk surface upon activation or deactivation of the other body of shape memory material.

The fixed caliper may not move relative to the brake disk during operation. Thereby, the fixed caliper may be less tolerant of disk imperfections. However, using a fixed caliper having the brake pad surface and the other brake pad surface in contact to the brake disk surface and the other brake disk surface, respectively, may insure or improve a homogeneous or equal wear of the brake pad and the other brake pad. Thereby, maintenance of the braking system may be simplified.

According to an embodiment of the present invention the brake caliper is adapted as a floating caliper , wherein the brake pad system comprises another brake pad having another brake pad surface to be brought into contact with another brake disk surface opposing the brake disk surface upon activation or deactivation of the body of shape memory material.

Thereby, the brake caliper may comprise a passive caliper portion and an active caliper portion. The active caliper portion may harbour or house the body of shape memory material, whereas the passive caliper may not house any body of shape memory material but only the other brake pad. However, upon activating the body of shape memory material comprised in the active portion of the caliper the passive portion of the caliper may move relative to the disk such that the other brake pad housed in the passive caliper portion may approach and touch the other disk surface to apply a friction force for reducing the rotational speed of the brake disk.

According to an embodiment of the present invention a wind turbine is provided comprising a braking system according to one of the embodiments described above, wherein the braking system is arranged and adapted for braking a main shaft of the wind turbine at which rotor blades are directly connected, wherein the brake disk (which may also be comprised in the braking system or the wind turbine) is mechanically connected to and rotates with a same rotational speed as a (secondary) shaft at which the rotational speed is between 50 times and 150 times higher than the rotational speed of the main shaft. In particular, between the main shaft and the (secondary) shaft a gear box may be arranged for converting the rotational speed of the main shaft to the rotational speed of the (secondary) shaft.

Alternatively, in other embodiments of the present invention, the braking system is arranged to directly brake the main shaft to which the brake disk is directly mechanically connected. However, in these embodiments a higher braking force may be required to be generated by the braking system in order to reduce the rotational speed of the main shaft, since a required braking torque may be higher.

Embodiments of the present invention are now described with reference to the accompanying drawings. The invention is not restricted to the illustrated or described embodiments.

### Brief Description of the Drawings

- Fig. 1: schematically illustrates a braking system including shape memory material according to an embodiment of the present invention;
- Fig. 2: schematically illustrates another braking system including shape memory material according to an embodiment of the present invention; and
- Fig. 3: schematically illustrates a cross-sectional view of a wind turbine according to an embodiment of the present invention.

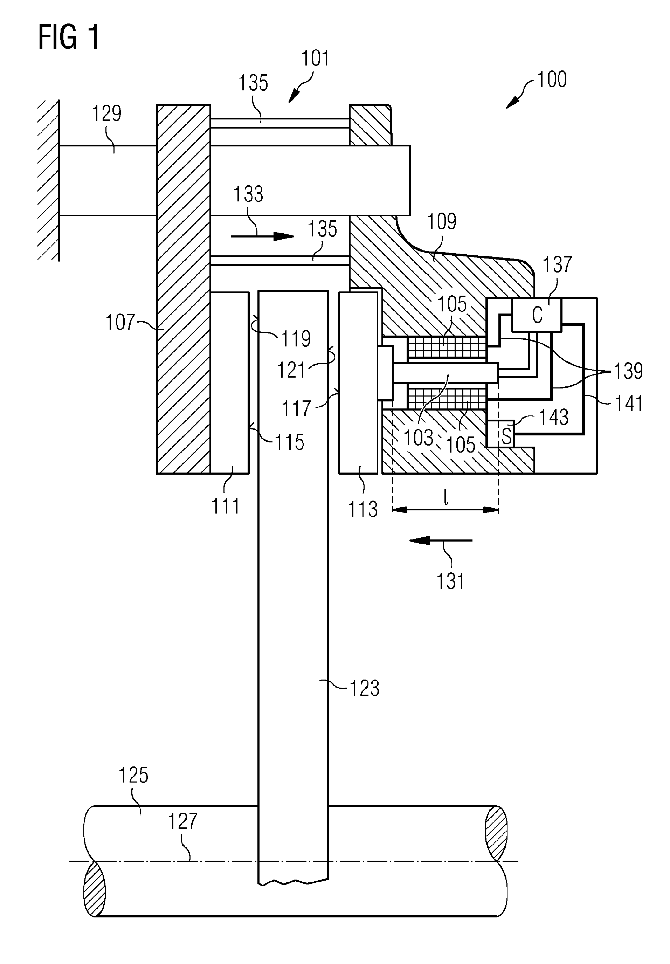

**Fig. 1** schematically illustrates a braking system 100 according to an embodiment of the present invention. The braking system 100 comprises a brake caliper 101, a body 103 of shape memory material and an activation system 105 for affecting, in particular activating here by heating, the shape memory material of the body 103.

In particular, the brake caliper 101 comprises a passive caliper portion 107 and an active caliper portion 109. The passive caliper portion 107 comprises or houses a brake pad 111 and the active caliper portion 109 comprises or houses a brake pad 113, wherein the brake pads 111, 113 are arranged with respective brake pad surfaces 115, 117 to approach and touch respective brake disk surfaces 119, 121 of a brake disk 123 which is fixedly connected to a rotation shaft 125 having a rotation axis 127. The rotation shaft 125 may for example a rotation shaft of a wheel of a vehicle, such as a car, or may be a rotation shaft of a wind turbine, in particular a secondary rotation shaft connected via a gear box to a main shaft of the wind turbine to which rotor blades are connected.

The brake caliper 101 is here configured as a floating caliper 101, wherein the passive caliper portion 107 is adapted to slide along the bar 129, if the body 103 of shape memory material is activated to increase its extent (see reference sign "1" in Fig. 1) along the direction 131 towards the brake disk surface 121 of the brake disk 123. Thereby, the passive caliper portion 107 slides along the direction 133 and also the active caliper portion 109 slides in this direction. Thereby, the active caliper portion 109 and the passive caliper portion 107 are connected by bars 135 such as to slide simultaneously along the bar 129 when the brake pad 113 contacts and applies a force via its brake pad surface 113 to the brake disk surface 121 of the brake disk 123.

The body 103 of shape memory material effectively replaces a piston of a conventional braking system, to apply the force in the direction 131 to the brake pad 113, in order to press the brake pad surface 117 against the brake disk surface 121 of the brake disk 123. If this force is applied by the brake pad 113 also the other brake pad 111 applies via the brake pad surface 115 a force to the brake disk surface 119, due to the sliding of the floating caliper 101 along the direction 133.

The body 103 comprises shape memory material which may be activated by heating the body 103 of shape memory material. Therefore, the braking system 100 comprises an activation system 105 which is here configured as a heating system, wherein the heating system 105 is configured as a resistance heater which is driven by current.

Thereby, the heating system 105 is controlled by a controller 137 which supplies an electric current via a line 139. Further, the controller is connected via a line 141 to a sensor 143 which detects a change of the extent 1 of the body 103 of shape memory material. The controller 137 receives the measurement data from the sensor 143 and controls the heating system 105 in dependence of the measurement data received from the sensor 143, in order to achieve a braking function due to the increase of the extent 1 of the body 103 of shape memory material.

Alternatively, the body 103 may comprise shape memory material which may be activatable by applying or subjecting it to a magnetic field.

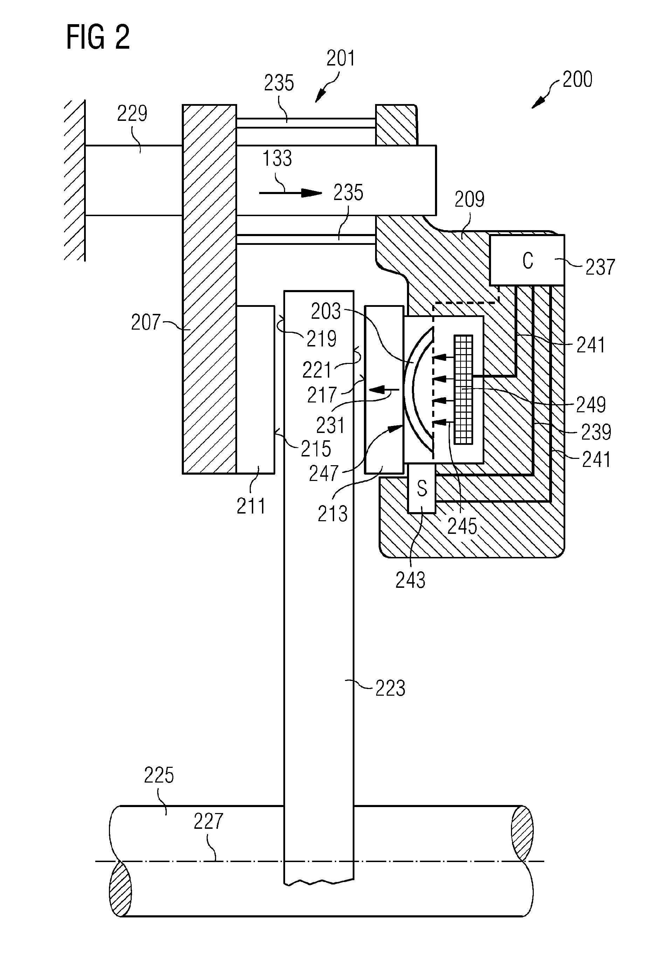

**Fig. 2** schematically illustrates another braking system 200 according to an embodiment of the present invention. Components or elements similar in structure and/or function as components or elements illustrated in Fig. 1 are labeled with reference signs differing only in the first digit. Thus, the description of these similar or same elements may be taken from the detailed description of Fig. 1.

Differing from the embodiment illustrated in Fig. 1 the braking system 200 comprises a body 203 of shape memory material which is activatable by subjecting it to a magnetic field. Upon activating the body 203 by applying a magnetic field which is sketched by field line arrows 245 the body 203 of shape memory material changes its shape such as to generate a protrusion 247. In contrast thereto, in the not activated state or deactivated state the body 203 of shape memory material would be flat having no protrusion 247. Due to the shape change upon activating the body 203 of shape memory material by application of the magnetic field 245 the brake pad 213 is pushed in the direction 231 towards the brake disk surface 221 of the brake disk 223.

Also in this case, the caliper 201 is configured as a floating caliper such that also the other brake pad 211 is pressed via its brake pad surface 215 towards another brake disk surface 219 of the brake disk 223.

The braking system 200 further comprises an electromagnet 249 which is adapted to generate the magnetic field 245 upon being supplied with an electric current from the controller 237 via the electric lines 239.

Further, a sensor 243 detects the change of the shape of the body 203 of shape memory material and sends measurement data via a line 241 to the controller 237 which receives the measurement data and determines the electric current supplied to the electromagnet 249 depending on the measurement data.

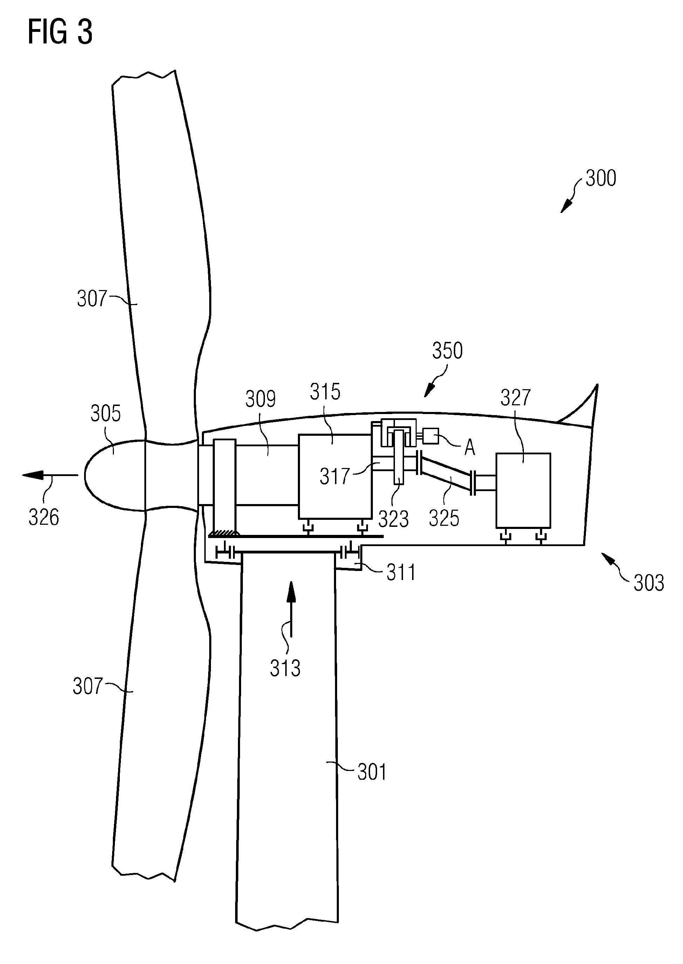

**Fig. 3** schematically illustrates a cross-sectional view of a wind turbine 300 according to an embodiment of the present invention comprising a braking system according to an embodiment of the present invention. The wind turbine 300 comprises a wind turbine tower 301, a nacelle 303 rotatably connected to the wind turbine tower and a hub 305 at which plural rotor blades 307 are connected. The hub 305 is fixedly connected to a main shaft 309 of the wind turbine which typically rotates with around 15 rpm during normal operation.

A yawing system 311 is provided for allowing yawing the nacelle 303 relative to the wind turbine tower, wherein the nacelle may be rotated along a vertical axis 313. Connected with the main shaft 309 is a gear box 315 which transforms the rotational speed of the main shaft to a higher rotational speed of a secondary shaft 317 at which a brake disk 323 is fixedly connected.

A rotational speed of the brake disk 323 may be reduced using a braking arrangement or braking system 350 which may be configured as the braking system 100 illustrated in Fig. 1 or the braking system 200 illustrated in Fig. 2. Via a coupling 325 the secondary shaft 317 is connected to a generator 327 of the wind turbine 300 which generates electric energy upon rotation of the secondary shaft 317.

In the wind turbine 300 the brake system 350 is used to stop the turbine drive train or to hold the drive train at standstill. The brake system 350 may operate independently from other operation systems of the turbine. It is designed as active or fail-safe brake. The brake system 350 consists of a brake disc 323, a caliper with brake pads. The design of the caliper can be a fixed-caliper or a floating caliper.

According to this embodiment of the invention a shape memory brake actuator substitutes the hydraulic caliper used in the conventional wind turbine drive train. Hydraulic medium is omitted; the tasks of the hydraulic caliper are taken over by a dry shape memory actuator.

The shape memory actuator is integrated in the brake caliper • This actuator pushes the brake pads against the brake disc and pulls by the moving of the passive caliper part the brake pad on the backside to the brake disc, so that the typical amplification effect of a floating caliper can be achieved. The actuator is driven by either a heater or an electromagnet. The heater can be integrated as external heat element or as an ohmic resistance which is supplied by electric current.

Additionally a sensor is integrated in the brake caliper to monitor the movement of the actuator. The electric power for both types of systems is delivered by the energy management of the turbine or a high-quality battery. The actuator is controlled by a controller. Sensors are applied on the drive train to report the operational state of the turbine to the controller. Sensor, controller and actuator are designed as closed-loop mechatronical system.

The shape memory actuator is also to be used as a fail safe brake package in addition to the conventional hydraulic brake system. In case of a too high amount of heat generated in the friction contact between brake disc and brake pads, the heat radiated by the brake system can be used to engage at least one thermal shape memory actuator to move an additional brake pad pairing against the brake disc. This would create an additional brake torque which improves the control of the drive train. Thus the drive-train can be easily returned to a safe condition although wind speeds are still over the defined wind limits. The brake would be automatically disengaged when the drive train is cooled down after a certain period of time. Next to a brake with thermal shape memory actuators, also magnetic shape memory actuators can be used for this application.

Advantageously hydraulic or pneumatic brake system components of a brake system used in a conventional wind turbine are giving up. There are no longer components needed for cooling and filtering the hydraulic or pneumatic medium. All these components of a hydraulic or pneumatic brake system would consume energy which can be saved with the mechatronical brake system with using shape memory brake actuators. An omission means lower weight, an easier control with a higher quality and easier maintaining. Additionally a better control of the braking manoeuvre with a faster actuation and release performance are possible

These advantages are also given by electronic brakes, which are technical state of today. But shape memory brake actuators have a lower weight, need less space and are cheaper than electronic brakes. Another advantage of these actuators is the lower emission of noise and vibrations.

Other possible brake designs are fixed caliper and using a drum brake instead of a disc break application. In conventional wind turbine brake systems, the braking forces are generated by a piston in a caliper which pushes and pulls a brake pad pairing against the surface of a disc, which rotates. The caliper is supported by the stationary gearbox components. In this invention the hydraulic piston is substituted by the shape memory actuator. Different types of shape memory actuators can be used for this application. Figure 2 shows a floating brake caliper using a longitudinal actuator. A NiTiNol - alloy piston is guided by the heater or an electromagnet which has the same functionality as a sliding bearing. When the brake is not engaged a retraction device, e.g. a mechanical spring, pushes the piston backwards, so that a gap between brake pad and brake disc remains. A sensor monitors the movement of the piston. A heater or alternatively an electromagnet and a sensor are connected to a controller.

Also other shapes of the actuator are possible. The actuator can alternatively consist of a spring which is made of a ferro-magnetic shape memory alloy or a thermal shape memory alloy. Another solution would be that the actuator consists of an alloy sheet, where the heat or induced magnetic field makes the sheet bending, see Figure 2. By the bending of the shape memory alloy sheet the brake pad is pushed against the brake disc. The sheet is mechanically mounted with the brake pad, so that the brake pad moves backwards when the actuator is disengaged.

Drum brakes generate braking force at the inner surface of a brake drum. The "Simplex" version is the most often used drum brake in passenger cars as (electronic) parking brake. Other drum brake principles like "Duplex", "Duo duplex" or "Duo servo" are also possible. For these cases the hydraulic cylinder, which is conventionally used to engage the drum brake, is substituted by a shape memory actuator.

The drive train for wind turbines can also be equipped with more than one caliper or drum brake.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Braking system (100, 200, 350) for braking a rotating brake disk (123, 223), the braking system comprising:
a brake caliper (101, 201);
a body (103, 203) of shape memory material housed in the brake caliper; and
an activation system (105, 205) for affecting the shape memory material,
wherein the activation system is adapted to effect a change of a structure of the body (103, 203) of shape memory material such as to reduce a rotational speed of the brake disk (123, 223).

2. Braking system according to claim 1, wherein the activation system (105, 205) is adapted to effect the change of the structure of the body of shape memory material such as to displace a brake pad surface (117, 217) in a direction towards a brake disk surface (121, 221) of the brake disk (123, 223) .

3. Braking system according to claim 1 or 2, wherein the change of the structure of the body of shape memory material comprises a change of a shape of the body of shape memory material, wherein in particular a curvature of the shape increases upon activating the body of shape memory material such that a protrusion (247) directed towards the brake disk surface evolves.

4. Braking system according to one of the preceding claims, wherein the change of the structure of the body of shape memory material comprises a change of an extent (1) of the body (103) of shape memory material such that in particular the extent changes in the direction (131) towards a brake disk surface (121) of the brake disk (123).

5. Braking system according to one of the preceding claims,
wherein the shape memory material is activated by heating the shape memory material and wherein the shape memory material in particular comprises an alloy including Ni and Ti.

6. Braking system according to the previous claim, wherein the activation system comprises a heating element (105) arranged for heating the shape memory material.

7. Braking system according to one of the preceding claims, wherein the shape memory material is activated by subjecting the shape memory material to a magnetic field (245) and wherein the shape memory material in particular comprises an alloy including Ni, Mn and Ga.

8. Braking system according to the previous claim, wherein the activation system comprises an electro magnet (249) arranged for subjecting the shape memory material to a magnetic field.

9. Braking system according to one of the preceding claims, wherein the shape memory material is activated by radiating the shape memory material with electromagnetic radiation, in particular light, and wherein the shape memory material in particular comprises a polymer.

10. Braking system according to one of the preceding claims, further comprising:
a controller (137, 237) controlling the activation system (105, 205).

11. Braking system according to one of the preceding claims, further comprising:
a sensor (143, 243) detecting a change of the structure of the body of shape memory material;
wherein the sensor is communicatively coupled (141, 241) to the controller (137, 237),
wherein the controller controls the activation system based on the change of the structure detected by the sensor.

12. Braking system according to one of the preceding claims, further comprising:
a brake pad system (111, 113) having a brake pad surface (117, 115) adapted to be brought into friction contact with a brake disk surface (119, 121) upon activation or deactivation of the shape memory material;

13. Braking system according to claim 12, further comprising:
another body of shape memory material,
wherein the brake caliper is adapted as a fixed caliper , wherein the brake pad system comprises another brake pad having another brake pad surface to be brought into contact with another brake disk surface opposing the brake disk surface upon activation or deactivation of the other body of shape memory material.

14. Braking system according to claim 12,
wherein the brake caliper is adapted as a floating caliper (101, 201),
wherein the brake pad system comprises another brake pad (111, 211) having another first brake pad surface (115, 215) to be brought into contact with another brake disk surface (119, 219) opposing the brake disk surface (121, 221) upon activation or deactivation of the body (103, 203) of shape memory material.

15. Wind turbine (300) comprising a braking system (350, 100, 200) according to one of the preceding claims for braking a main shaft (309) of the wind turbine at which rotor blades (307) are connected, wherein the brake disk (323) is mechanically connected to and rotates with a same rotational speed as a shaft (317) at which the rotational speed is between 50 times and 150 times higher than a rotational speed of the main shaft.
